# EUROPÄISCHE PATENTSCHRIFT

(11) **EP 2 103 837 B1**
(45) Veröffentlichungstag und Bekanntmachung des Hinweises auf die Patenterteilung: **14.03.2012**
(21) Anmeldenummer: 09000380.7
(22) Anmeldetag: 14.01.2009
(51) Int. Cl.: F16F 13/26, F16F 13/10

(54) **Schaltbares elastisches Lager, insbesondere Aggregatelager eines Kraftfahrzeuges**
Switchable elastic bearing, in particular aggregate bearing for a motor vehicle
Palier élastique commutable, notamment palier d'agrégat d'un véhicule automobile

(30) Priorität: 20.03.2008 DE 102008015370
(43) Veröffentlichungstag der Anmeldung: 23.09.2009
(73) Patentinhaber: Audi AG, 85045 Ingolstadt (DE)
(72) Erfinder: Killian, Friedrich, 85122 Hitzhofen (DE)
(74) Vertreter: Asch, Konrad

(56) Entgegenhaltungen:
- EP-A- 0 262 544
- EP-A- 0 984 193
- DE-A1- 3 801 108
- DE-A1- 4 121 939

## Beschreibung

Die Erfindung betrifft ein schaltbares elastisches Lager, insbesondere ein Aggregatelager eines Kraftfahrzeugs, nach dem Oberbegriff des Anspruchs 1.

Das Dokument EP 0 984 193 A zeigt die Merkmale des Oberbegriffs von Anspruch 1.

Ein bekanntes weiteres schaltbares elastisches Lager als Aggregatelager eines Kraftfahrzeugs besteht aus einem Elastomerringkörper als Tragkörper mit einem zentralen, aggregateseitigen Lagerkern, wobei an den Tragkörper direkt oder indirekt nach unten ein topfartiges Lagergehäuse zur Ausbildung eines Lagerinnenraums anschließt. Konkret ist der Elastomerringkörper konisch angestellt und nach radial außen durch eine anvulkanisierte Metallbuchse abgestützt, die mit dem oberen Rand des Lagergehäuses dicht verbunden ist. Die Richtungsangaben oben/unten beziehen sich jeweils auf die montierte Einbaulage des Aggregatelagers.

Im Lagerinnenraum ist unterhalb des Tragkörpers und von diesem zumindest teilweise begrenzt ein mit einem Arbeitsmedium, insbesondere einer Hydraulikflüssigkeit gefüllter Arbeitsraum ausgebildet. Dieser Arbeitsraum ist nach unten zum Lagergehäuse hin durch eine Düsenplatte begrenzt, wobei der Arbeitsraum durch einen Dämpfungskanal in der Düsenplatte als Strömungsverbindung für die Hydraulikflüssigkeit mit einem an die Düsenplatte nach unten anschließenden Ausgleichsraum verbunden ist. Der Ausgleichsraum ist nach unten durch eine Ausgleichsmembran aus Elastomermaterial begrenzt. Unter der Ausgleichsmembran liegt ein Zwischenraum zwischen der Ausgleichsmembran und dem Lagergehäuse, wobei im Lagergehäuseboden, Entlüftungsöffnungen für eine Druckentlastung des Zwischenraums angebracht sind.

In der Düsenplatte ist zudem eine bewegliche Entkopplungsmembran integriert, unter der sich eine Luftkammer befindet. Diese Luftkammer ist über einen Entlüftungskanal mit einer schaltbaren Ventileinheit verbunden, mit welcher der Entlüftungskanal für eine Verbindung zur Umgebungsatmosphäre geöffnet oder geschlossen werden kann. Der Schwingungskomfort und die Motorakustik können dadurch verbessert werden, dass in Abhängigkeit bestimmter Betriebszustände des Aggregats durch Zu- bzw. Abschalten des Luftvolumens in der Luftkammer auf die Lagersteifigkeit Einfluss genommen wird. Der Entlüftungskanal entspricht dabei einem Bypass zur Umgebungsatmosphäre, der mittels der Ventileinheit durch einen elektromagnetisch oder über Unterdruck betätigbaren Kolben, geöffnet oder geschlossen werden kann. Insbesondere kommen elektromagnetisch betätigbare Schalter, sogenannte Solenoide zum Einsatz, die im Lagergehäuse integriert oder außerhalb des Gehäuses angebaut sein können.

Konkret ist bei dem bekannten Lager der Entlüftungskanal in der Düsenplatte integriert und endet seitlich an einer Dichtfläche, an die sich für einen Druckausgleich ein Ringteil mit kleinen Bohrungen anschließt. Der Solenoid als Aktor umfasst einen betätigbaren Stößel mit einem Dichtkolben, der im ausgefahrenen Zustand an der Dichtfläche anliegt, dadurch den Entlüftungskanal schließt und damit die Strömungsverbindung zur Umgebungsatmosphäre absperrt, wodurch eine hohe Lagerdämpfung erreicht wird. Im anderen Schaltzustand ist der Stößel mit dem Dichtkolben eingefahren, wodurch die Entlüftung über die kleinen Bohrungen zum Druckausgleich für eine geringere Lagerdämpfung offen ist.

Der Druckausgleich wird somit hier unmittelbar am Ende des Entlüftungskanals durchgeführt mit einer direkten Verbindung durch die kleinen Bohrungen zur Umgebung. Nachteilig ist es hierbei, dass insbesondere beim Einfahren des Dichtkolbens von der Umgebung durch die Bohrungen Schmutz- und/oder Salzwasser angesaugt werden kann, da solche Aggregatelager in einer üblicherweise hochbelasteten Umgebung im Motorraum liegen. Nachteilig kann dadurch der Dichtsitz und/oder der Dichtkolben beschädigt werden und/oder der Solenoid durch Korrosion ausfallen, wodurch die das Zu- oder Abschalten des Luftvolumens für eine schaltbare Änderung der Lagerdämpfung teilweise oder insgesamt nicht mehr gegeben ist.

Aufgabe der Erfindung ist es daher ein gattungsgemäßes schaltbares elastisches Lager, insbesondere als Aggregatelager eines Kraftfahrzeugs so weiterzubilden, dass die Funktionssicherheit verbessert wird.

Diese Aufgabe wird mit den Merkmalen des Anspruchs 1 gelöst.

Der Entlüftungskanal ist über die schaltbare Ventileinheit mit einem Verbindungskanal in den Zwischenraum unter der Ausgleichsmembran weitergeführt. Damit ist die Luftkammer unter der Entkopplungsmembran bei geöffnetem Ventilelement durch den Entlüftungskanal und weiter über den Verbindungskanal, den Zwischenraum unter der Ausgleichsmembran und die wenigstens eine Entlüftungsöffnung am Lagergehäuse zur Umgebungsatmosphäre hin für eine reduzierte Dämpfung entlüftbar. Bei geschlossenem Ventilelement ist dagegen der Entlüftungskanal abgesperrt und das Luftvolumen in der Luftkammer für eine höhere Dämpfung eingeschlossen. Vorteilhaft ist damit die Entlüftung der Luftkammer nicht mehr direkt wie im Stand der Technik im problematischen Bereich des Ventilelements, insbesondere im Bereich eines dortigen Dichtkolbens durchgeführt. Die Verbindung zur Außenumgebung liegt stattdessen weit versetzt bei der wenigstens einen Entlüftungsöffnung oder bei mehreren Entlüftungsöffnungen am Lagergehäuse unterhalb der Ausgleichsmembran. Einerseits ist damit eine große örtliche Distanz geschaffen, so dass Schmutz- und/oder Salzwasser nicht in den Bereich der Ventileinheit, insbesondere eines Stößels mit Dichtkolben und an eine Dichtfläche gelangen können und andererseits ist die Ansaugwirkung beim Einfahren eines Dichtkolbens bezüglich der Entlüftungsöffnungen am Lagergehäuse vernachlässigbar gering, da der Zwischenraum unter der Ausgleichsmembran vergleichsweise groß ist. Der Zwischenraum unter der Ausgleichsmembran wird somit hier in einer Zusatzfunktion als Schmutz- und Feuchtigkeitsabscheidekammer verwendet. Insgesamt sind damit Beschädigungen an den Funktionsteilen der Ventileinheit, insbesondere an Dichtflächen, Dichtkolben, Aktuatoren etc. durch Umwelteinflüsse nicht mehr gegeben oder zumindest erheblich reduziert, so dass die Schaltfunktion des Lagers bei weniger Ausfällen und verlängerter Lebensdauer verbessert und sicherer ist.

In einer konkreten Ausführungsform nach Anspruch 2 wird vorgeschlagen, dass die Ventileinheit aus einem schaltbaren Aktor und einem damit betätigbaren Stößel besteht, wobei an dem Stößel ein Steuerkolben als Ventilstellglied angeschlossen ist. Im ausgefahrenen Zustand des Stößels ist dann der Strömungsweg zwischen dem Entlüftungskanal und dem Verbindungskanal geschlossen und im eingefahrenen Zustand geöffnet.

Je nach den Gegebenheiten können alle geeigneten Aktoren verwendet werden, wobei gemäß Anspruch 3 insbesondere elektrisch und/oder pneumatisch und/oder hydraulisch betätigbare Aktoren in Betracht kommen.

Die Maßnahme mit dem Verbindungskanal zum Zwischenraum unter der Ausgleichmembran ist nach Anspruch 4 besonders vorteilhaft einsetzbar, wenn die Ventileinheit mit dem Aktor und dem Steuerkolben seitlich am oberen Randbereich des topfförmigen Lagergehäuses angeordnet ist. Von dort aus erstreckt sich dann der Verbindungskanal in einer seitlichen Lagergehäusewand als Bohrung nach schräg unten in den Zwischenraum unter die Ausgleichsmembran. Wenigstens eine Entlüftungsöffnung, bevorzugt mehrere Entlüftungsöffnungen sind am Boden des Lagergehäuses angebracht. Durch die relativ höhere Lage der Ventileinheit mit der empfindlichen Dichtfläche, dem Stößel, dem Dichtkolben, dem Solenoid etc. im Vergleich zur tieferen Lage der Entlüftungsöffnungen am Lagergehäuseboden und den schräg nach unten weisenden Verbindungskanal ist ersichtlich ein Vordringen von Schmutz und Feuchtigkeit zu den empfindlichen Bauteilen praktisch ausgeschlossen.

Um eine ungehinderte Entlüftung zu gewährleisten, ist es nach Anspruch 5 zweckmäßig, dass der Gesamtdurchmesser der Entlüftungsöffnungen am Lagergehäuseboden wesentlich größer ist im Vergleich zum Durchmesser des Entlüftungskanals des Verbindungskanals.

Für einen einfachen Aufbau kann nach Anspruch 6 der Entlüftungskanal zur Ventileinheit ausgehend von der Luftkammer in der Düsenplatte als Bohrung integriert sein.

Anhand einer Zeichnung wird die Erfindung näher erläutert.

Die einzige Figur zeigt einen Schnitt durch ein schaltbares elastisches Lager als Aggregatelager eines Kraftfahrzeugs.

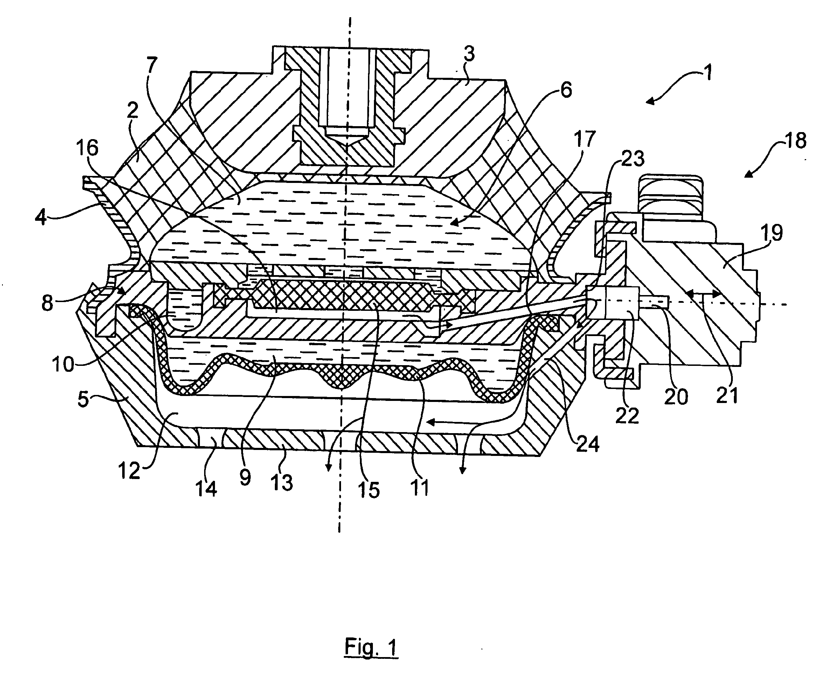

In Fig. 1 ist ein Aggregatelager 1 eines Kraftfahrzeugs dargestellt mit einem Elastomerringkörper als Tragkörper 2 mit einem zentralen Lagerkern 3 zum Anschluss an ein (nicht dargestelltes) Aggregat, insbesondere an ein Dieselaggregat. Der Tragkörper 2 ist konisch angestellt und durch eine seitliche anvulkanisierte Metallbuchse 4 abgestützt, die nach unten hin mit einem topfartigen Lagergehäuse 5 dicht verbunden ist. Durch den Tragkörper 2 und das Lagergehäuse 5 wird somit ein Lagerinnenraum 6 gebildet, der wie folgt aufgeteilt ist:
Unterhalb des Tragkörpers 2 befindet sich ein mit Hydraulikflüssigkeit gefüllter Arbeitsraum 7, der nach unten hin durch eine Düsenplatte 8 bestehend aus einem Düsenplattenteil mit Düsenplattendeckel begrenzt ist. Unter der Düsenplatte liegt ein Ausgleichsraum 9, der über einen Dämpfungskanal 10 mit dem Arbeitsraum 7 strömungsverbunden ist. Der Ausgleichsraum 9 ist nach unten durch eine Ausgleichsmembran 11 aus Elastomermaterial abgeschlossen, wodurch zwischen dem Lagergehäuse 5 und der Ausgleichsmembran 11 ein Zwischenraum 12 mit einem sich betriebsmäßig verändernden Volumen gebildet ist. Für eine Entlüftung sind dazu am Lagergehäuseboden 13 Entlüftungsöffnungen 14 als Verbindung zur Umgebung angebracht. Das Lagergehäuse 5 ist als ortsfeste Lagerstelle mit dem Fahrzeugaufbau verbunden.

In der Düsenplatte 8 zwischen dem Düsenplattenteil und dem Düsenplattendeckel ist eine Entkopplungsmembran 15 aus Elastomer integriert, unter der sich eine Luftkammer 16 befindet, an die ein in der Düsenplatte 8 verlaufender Entlüftungskanal 17 angeschlossen ist, der in einem oberen Randbereich des topfförmigen Lagergehäuses 5 in einer Ventileinheit 18 endet.

Die Ventileinheit 18 umfasst im Wesentlichen einen schaltbaren Aktor 19, beispielsweise mit einem Solenoid als Stellelement zur Linearverschiebung eines Stößels 20 in eine eingefahrene und eine ausgefahrene Position, wie dies schematisch durch den Doppelpfeil 21 dargestellt ist. An den Stößel 20 ist endseitig ein Dichtkolben 22 angeschlossen, der gegen eine Dichtfläche 23 zum Verschließen des Entlüftungskanals 17 pressbar ist.

Vom Zylinderraum des Dichtkolbens 22 führt ein Verbindungskanal 24 in einer seitlichen Lagergehäusewand als Bohrung schräg nach unten in den Zwischenraum 12 unter die Ausgleichsmembran 11.

Das dargestellte Aggregatelager 1 hat generell die allgemein bekannte Funktion, dass sich bei einer Ausfederung/Einfederung des aggregatefesten Lagerkerns 3 bezüglich des aufbaufesten Lagergehäuses 5 der Tragkörper 2 aus Elastomer in seiner Gestalt verändert womit eine Volumenänderung des Arbeitsraums 7 verbunden ist. Dadurch wird Hydraulikflüssigkeit zwischen dem Arbeitsraum 7 und dem Ausgleichsraum 9 über den Dämpfungskanal 10 verlagert, wobei der Zwischenraum 12 unter der Ausgleichsmembran 11 in Verbindung mit einer Volumenänderung des Ausgleichsraums 9 über die Entlüftungsöffnugen 14 entlüftet wird. Durch diese Verlagerung von Hydraulikflüssigkeit erfolgt eine Lagerdämpfung, die zudem mittels der Düsenplatte 8 über eine Verlagerung der Entkopplungsmembran 15 beeinflussbar ist. Im dargestellten Zustand ist der Stößel 20 mit dem Dichtkolben 22 eingefahren, wodurch die Strömungsverbindung von der Luftkammer 16 über den Entlüftungskanal 17, den Verbindungskanal 24 in den Zwischenraum 12 und über die Entlüftungsöffnungen 14 zur Umgebung hin freigegeben und freigeschaltet ist, wie dies mit den Strömungspfeilen eingezeichnet ist. Damit ist die Entkopplungsmembran 15 relativ frei beweglich und die Lagerdämpfung relativ gering.

Wenn der Aktor 19 so geschaltet ist, dass der Stößel 20 und damit der Dichtkolben 22 gegen die Dichtfläche 23 ausgefahren ist, wird offensichtlich der Entlüftungskanal 1-7 und damit das Luftvolumen in der Luftkammer 16 abgeschlossen, wodurch die Bewegung der Entkopplungsmembran 15 gehemmt ist und damit insgesamt die Lagerdämpfung erhöht wird.

## Patentansprüche

1. Schaltbares elastisches Lager, insbesondere Aggregatelager eines Kraftfahrzeugs,
mit einem Elastomerringkörper als Tragkörper (2) mit einem zentralen Lagerkern (3),
mit einem am Tragkörper (2) direkt oder indirekt dicht anschließenden, topfartigen Lagergehäuse (5) zur Ausbildung eines Lagerinnenraums (6),
mit einem zumindest teilweise durch den Tragkörper (2) begrenzten, mit Hydraulikflüssigkeit gefüllten Arbeitsraum (7) im Lagerinnenraum (6),
mit einer Begrenzung des Arbeitsraums (7) zum Lagergehäuse (5) hin durch eine Düsenplatte (8) mit integrierter Entkopplungsmembran (15) mit daran anschließender Luftkammer (16), wobei die Luftkammer (16) über einen Entlüftungskanal (17) mit einer schaltbaren Ventileinheit (18) zur Umgebungsatmosphäre für eine reduzierte Dämpfung entlüftbar ist,
mit einem an die Düsenplatte (8) anschließenden und durch eine Ausgleichsmembran (11) aus Elastomermaterial begrenzten Ausgleichsraum (9), der über einen Dämpfungskanal (10) als Strömungsverbindung für die Hydraulikflüssigkeit mit dem Arbeitsraum (7) verbunden ist, und
mit einem Zwischenraum (12) zwischen der Ausgleichsmembran (11) und dem Lagergehäuse (5), wobei im Lagergehäuse (5) wenigstens eine Entlüftungsöffnung (14) angebracht ist, wobei
der Entlüftungskanal (17) über die schaltbare Ventileinheit (18) mit einem Verbindungskanal (24) in den Zwischenraum (12) unter der Ausgleichsmembran (11) weitergeführt und damit die Luftkammer (16) durch den Entlüftungskanal (17) bei geöffneter Ventileinheit (18) weiter über den Verbindungskanal (24), den Zwischenraum (12) und die wenigstens eine Entlüftungsöffnung (14) am Lagergehäuse (5) zur Umgebungsatmosphäre für eine reduzierte Dämpfung entlüftbar ist, **dadurch gekennzeichnet, dass** der Entlüftungskanal (17) in der Düsenplatte (8) verläuft und in einem oberen Randbereich des Lagergehäuses (5) in der Ventileinheit (18) endet.

2. Schaltbares elastisches Lager nach Anspruch 1, **dadurch gekennzeichnet, dass** die Ventileinheit (18) aus einem schaltbaren Aktor (19) und einem damit betätigbaren Stößel (20) besteht,
dass mit dem Stößel (20) ein Steuerkolben (22) als Ventilstellglied verbunden ist, der dergestalt verlagerbar ist, dass im ausgefahrenen Zustand des Stößels (20) der Strömungsweg zwischen dem Entlüftungskanal (17) und dem Verbindungskanal (24) geschlossen und im eingefahrenen Zustand geöffnet ist.

3. Schaltbares elastisches Lager nach Anspruch 2, **dadurch gekennzeichnet, dass** der Aktor (19) elektrisch und/oder pneumatisch und/oder hydraulisch betätigbar ist.

4. Schaltbares elastisches Lager nach Anspruch 2 oder 3, **dadurch gekennzeichnet, dass** die Ventileinheit (18) mit dem Aktor (19) und dem Steuerkolben (22) seitlich am oberen Randbereich des topfförmigen Lagergehäuses (5) angeordnet ist,
dass von dort aus der Verbindungskanal (24) in einer seitlichen Lagergehäusewand als Bohrung nach schräg unten in den Zwischenraum (12) unter die Ausgleichsmembran (11) geführt ist, und
dass die wenigstens eine, bevorzugt mehrere Entlüftungsöffnungen (14) am Boden (13) des Lagergehäuses (5) angebracht sind.

5. Schaltbares elastisches Lager nach Anspruch 4, **dadurch gekennzeichnet, dass** die Gesamtquerschnittsflächen der mehreren Entlüftungsöffnungen (14) wesentlich größer im Vergleich zu den Querschnittsflächen des Entlüftungskanals (17) und des Verbindungskanals (24) sind.

6. Schaltbares elastisches Lager nach einem der Ansprüche 1 bis 5, **dadurch gekennzeichnet, dass** der Entlüftungskanal (17) zur Ventileinheit (18) ausgehend von der Luftkammer (16) in der Düsenplatte (8) als Bohrung integriert ist.

## Claims

1. Switchable elastic mount, in particular assembly mount of a motor vehicle,
having a ring-shaped elastomer body as a support body (2) with a central mount core (3),
having a pot-like mount housing (5), which directly or indirectly sealingly adjoins the support body (2), for forming a mount interior space (6),
having a working chamber (7), which is at least partially delimited by the support body (2) and filled with hydraulic fluid, in the mount interior space (6),
having a delimitation of the working chamber (7) in the direction of the mount housing (5) by means of a nozzle plate (8) with integrated decoupling diaphragm (15) and with air chamber (16) adjoining said decoupling diaphragm, wherein for a reduced damping action, the air chamber (16) can be ventilated to the surrounding atmosphere via a ventilation duct (17) with a switchable valve unit (18),
having a compensating chamber (9) which adjoins the nozzle plate (8) and which is delimited by a compensating diaphragm (11) composed of elastomer material and which is connected to the working chamber (7) via a damping duct (10) as a flow connection for the hydraulic fluid, and
having an intermediate chamber (12) between the compensating diaphragm (11) and the mount housing (5), wherein in the mount housing (5) there is formed at least one ventilation opening (14),
wherein the ventilation duct (17) is continued via the switchable valve unit (18) and by means of a connecting duct (24) into the intermediate chamber (12) below the compensating diaphragm (11), and in this way, for a reduced damping action, when the valve unit (18) is open, the air chamber (16) can be ventilated to the surrounding atmosphere through the ventilation duct (17) and onward via the connecting duct (24), the intermediate chamber (12) and the at least one ventilation opening (14) on the mount housing (5), **characterized in that** the ventilation duct (17) runs in the nozzle plate (8) and ends, in an upper edge region of the mount housing (5), in the valve unit (18).

2. Switchable elastic mount according to Claim 1, **characterized in that** the valve unit (18) is composed of a switchable actuator (19) and of a plunger (20) that can be actuated by said actuator,
**in that** a control piston (22) as a valve actuating element is connected to the plunger (20), which control piston is displaceable such that, in the deployed state of the plunger (20), the flow path between the ventilation duct (17) and the connecting duct (24) is closed, and in the retracted state, said flow path is open.

3. Switchable elastic mount according to Claim 2, **characterized in that** the actuator (19) is electrically and/or pneumatically and/or hydraulically actuable.

4. Switchable elastic mount according to Claim 2 or 3, **characterized in that** the valve unit (18) with the actuator (19) and the control piston (22) is arranged laterally on the upper edge region of the pot-shaped mount housing (5),
**in that**, from there, the connecting duct (24) runs in a lateral mount housing wall as a bore obliquely downward into the intermediate chamber (12) below the compensating diaphragm (11), and
**in that** the at least one, preferably multiple ventilation openings (14) are formed on the base (13) of the mount housing (5).

5. Switchable elastic mount according to Claim 4, **characterized in that** the total cross-sectional areas of the multiple ventilation openings (14) are significantly larger than the cross-sectional areas of the ventilation duct (17) and of the connecting duct (24).

6. Switchable elastic mount according to one of Claims 1 to 5, **characterized in that**, proceeding from the air chamber (16), the ventilation duct (17) to the valve unit (18) is integrated as a bore in the nozzle plate (8).

## Revendications

1. Palier élastique commutable, en particulier palier de moteur de véhicule automobile, le palier présentant :
un corps annulaire en élastomère qui sert de corps porteur (2) et qui est doté d'un noyau central de palier (3),
un boîtier de palier (5) en forme de cuvette qui se raccorde directement ou indirectement et de manière étanche au corps porteur (2) pour former un espace intérieur de palier (6),
un espace de travail (7) disposé dans l'espace intérieur de palier (6), délimité au moins en partie par le corps porteur (2) et rempli de fluide hydraulique,
la frontière entre l'espace de travail (7) et le boîtier de palier (5) étant formée par une plaque (8) à tuyère à laquelle est intégrée une membrane de découplage (15) à laquelle se raccorde une chambre à air (16), la chambre à air (16) pouvant être vidée par un canal d'évent (17) doté d'une unité de soupape (18) commutable s'ouvrant sur l'atmosphère ambiante en vue de réduire l'amortissement,
un espace d'équilibrage (9) qui se raccorde à la plaque (8) à tuyère, limité par une membrane d'équilibrage (11) en matériau élastomère et relié par un canal d'amortissement (10) à l'espace de travail (7), le canal d'amortissement servant de liaison d'écoulement au liquide hydraulique,
un espace intermédiaire (12) situé entre la membrane d'équilibrage (11) et le boîtier de palier (5), au moins une ouverture d'évent (14) étant ménagée dans le boîtier de palier (5),
le canal d'évent (17) étant prolongé jusque dans l'espace intermédiaire (12) situé en dessous de la membrane d'équilibrage (11) et au-delà de l'unité (18) de soupape commutable par un canal de liaison (24), la chambre à air (16) pouvant ainsi, lorsque l'unité (18) de soupape commutable est ouverte, être vidée dans l'atmosphère ambiante à travers le canal d'évent (17) par le canal de liaison (24), l'espace intermédiaire (12) et la ou les ouvertures d'évent (14) ménagées dans le boîtier de palier (5) en vue de réduire l'amortissement,
**caractérisé en ce que**
le canal d'évent (17) s'étend dans la plaque (8) à tuyère et se termine dans l'unité (18) de soupape dans la bordure supérieure du boîtier de palier (5).

2. Palier élastique commutable selon la revendication 1, **caractérisé en ce que** l'unité de soupape (18) est constituée d'un actionneur commutable (19) et **en ce qu'**un piston de commande (22) qui sert d'organe d'actionnement de soupape est relié au poussoir (20) et peut être déplacé de telle sorte que lorsque le poussoir (20) est sorti, le parcours d'écoulement entre le canal d'évent (17) et le canal de liaison (24) est fermé, pour être ouvert lorsque le poussoir est en position rétractée.

3. Palier élastique commutable selon la revendication 2, **caractérisé en ce que** l'actionneur (19) peut être activé électriquement, pneumatiquement et/ou hydrauliquement.

4. Palier élastique commutable selon les revendications 2 ou 3, **caractérisé en ce que** l'unité de soupape (18) est disposée avec l'actionneur (19) et le piston de commande (22) sur le côté de la bordure supérieure du boîtier de palier (5) en forme de cuvette, **en ce que** de là, elle se prolonge hors du canal de liaison (24) dans une paroi latérale du boîtier de palier sous la forme d'un alésage orienté obliquement vers le bas, pour aboutir dans l'espace intermédiaire (12) situé en dessous de la membrane d'équilibrage (11), et **en ce que** la et de préférence les ouvertures d'évent (14) sont ménagées dans le fond (13) du boîtier de palier (5).

5. Palier élastique commutable selon la revendication 4, **caractérisé en ce que** la superficie totale de la section transversale des différentes ouvertures d'évent (14) est beaucoup plus grande que les superficies de la section transversale du canal d'évent (17) et du canal de liaison (24).

6. Palier élastique commutable selon l'une des revendications 1 à 5, **caractérisé en ce que** le canal d'évent (17) qui conduit à l'unité de soupape (18) en partant de la chambre à air (16) est intégré dans la plaque (8) à tuyère sous la forme d'un alésage.
